Europäisches Patentamt

European Patent Office

Office européen des brevets

(19)

(11) Publication number: **0 650 293 A2**

(12) **EUROPEAN PATENT APPLICATION**

(21) Application number: **94116718.1**

(22) Date of filing: **23.10.94**

(51) Int. Cl.⁶: **H04N 5/44**

(30) Priority: **26.10.93 IT TO930797**

(43) Date of publication of application:
**26.04.95 Bulletin 95/17**

(84) Designated Contracting States:
**DE ES FR GB IT NL PT**

(71) Applicant: **SELECO S.p.A.**
**Viale Treviso, 15**

**I-33170 Pordenone (IT)**

(72) Inventor: **Balanza, Marino**
**via Scarpa 1/C**
**I-31100 Treviso (IT)**

(74) Representative: **Dini, Roberto, Dr. Ing.**
**Via Castagnole, 59**
**I-10060 None (Torino) (IT)**

(54) **Conversion method of the frame frequency of a video signal from 50 Hz to 75 Hz with movement compensation and apparatus for implementing such method.**

(57) A method is described for the conversion of the frame frequency of a video signal of progressive scansion from 50 Hz to 75 Hz; the main characteristic of the method consists in the fact that a temporal redistribution of the original frames is provided and an interpolation of an additional frame every two originals.

A second important characteristic of the described method consists in the fact that the interpolation provides a movement compensation; a movement vector is associated to every pixel of the frame to be interpolated; the values of the interpolated pixels are produced with an operation of average along the estimated path of movement.

FIG. 1

The conversion of the frame frequency that represent the images of a video sequence is a subject that has called the attention of technicians due to the proliferation of the source types of signals and of the display formats being of different characteristics.

The necessity for developing efficient methods for carrying out such conversions is particularly felt, both in the field of integration applications of television images in multimedia systems, and in the field of advanced television systems, with the aim of reducing a typical artefact (large area flicker) of the actual systems.

In particular a conversion with a factor being equal to 1,5, i.e. from 50 Hz to 75 Hz, is generally considered sufficient, be it as the frequency of 75 Hz is close to that normally used in monitors of work stations, and also because such frequency results in supplying an acceptable compromise between the visual quality and the computational complexity.

The aim of the present invention is therefore that of indicating a method for carrying out such conversion in an efficient manner, so as to obtain a satisfying image quality while maintaining the calculation complexity within acceptable limits.

For reaching the intended aims, the invention has as its subject a method for the conversion of the frame frequency of a video signal from 50 Hz to 75 Hz, characterised in that a temporal redistribution is provided of the original frames and an interpolation of an additional frame every two originals.

In a first preferred form of realisation the invention has as its subject a method for the conversion of the frame frequency of a video signal from 50 Hz to 75 Hz, further characterised in that said temporal redistribution provides that one of the two original frames is displayed 3,3 milliseconds before the instant that it occupied in the original sequence, and that the additional frame be interpolated in a central position between the two said original frames temporally displaced.

In a second preferred form of realisation the invention has as its subject a method for the conversion of the frame frequency of a video signal of progressive scansion from 50 Hz to 75 Hz, further characterised in that said interpolation provides a movement compensation, which is a movement vector that is associated to every pixel of the frame that is to be interpolated and that the values of the interpolated pixels are produced with an operation of average along the estimated path of movement.

Further characteristics and advantages of the present invention will result in being clear from the following description and annexed drawings, supplied purely as an explanatory and non-limiting example, wherein:

- figure 1 illustrates a possible temporal distribution of the frames for a conversion from 50 Hz to 75 Hz;
- figure 2 illustrates the temporal distribution according to the invention of the frames for a conversion from 50 Hz to 75 Hz;
- figure 3 illustrates an example of linear interpolation with movement compensation;
- figure 4 illustrates the nine rays to be examined when the support window is one of 3x3;
- figure 5 illustrates examples of blocks of pixels that can be utilised for block matching;
- figure 6 illustrates examples of paths of curved rays;
- figure 7 illustrates how the rays A-I'-P'' and B-I'-Q'' identify the same movement vector relative to pixel I';
- figure 8 illustrates an example of two superimposed objects;
- figure 9 illustrates a table relative to a working example of the method according to the invention;
- figure 10 illustrates logic block diagram of a possible realisation of the method according to the invention;
- figure 11 illustrates the temporal diagram relative to the functioning of the realisation of figure 10.

## 1 Conversion from 50 to 75 Hz: a basic method

### 1.1 Temporal distribution of the interpolated frames

In the various methods proposed for increasing the scansion frequency, the frames or fields of the sequence in output are obtained in part by way of copies of the originals, in part by way of interpolation. In the case of the conversion from 50 Hz to 100 Hz all the original frames are included in the interpolated sequence, and the doubling of the scansion frequency is simply obtained by way of inserting a new interpolated frame between every pair of consecutive original frames. This allows for realising methods with symmetry characteristics in which all the frames or fields in input are treated in the same way. This is not however possible in the present case, as the fractional 1,5 conversion factor sees to it that the original frames have to contribute in different ways in the creation of new frames.

Let us consider the temporal distances between interpolated and original frames of the sequences at 50 Hz and at 75 Hz.

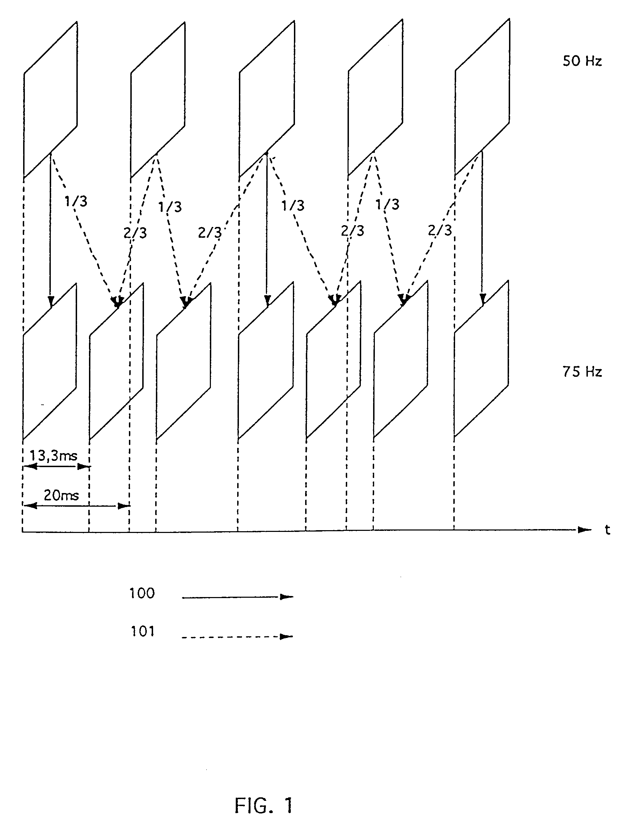

A simple distribution method of the interpolated frames is represented in figure 1, in which reference number 100 indicates a repeated frame and reference number 101 on the other hand indicates a contribution to the interpolation. Of every three new frames, one is obtained by way of repetition of original frames, the other two are obtained by way of interpolation. As the quality of the original frames is naturally of a better quality than the interpolated frames, the fact that only half of the frames originally available are used in the output sequence constitutes a drawback of this approach.

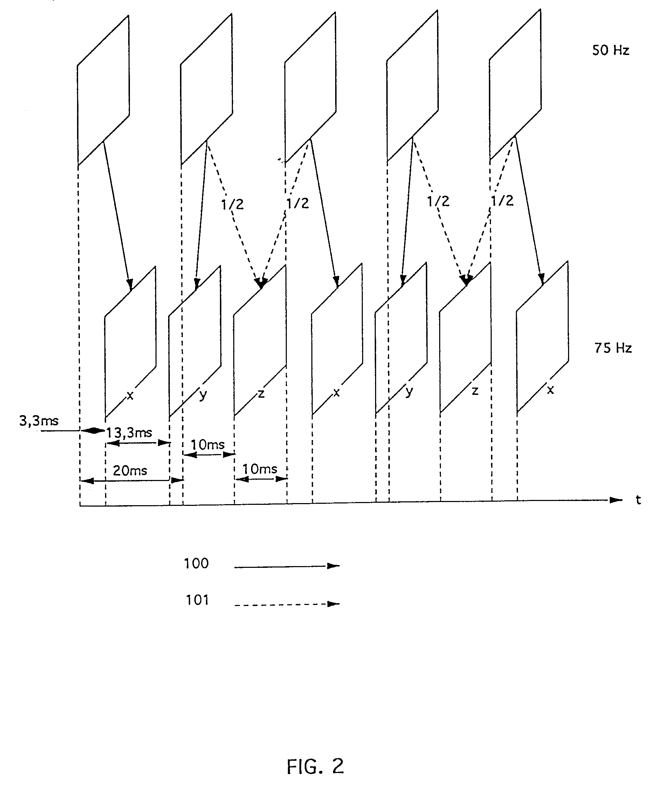

Moreover the temporal arrangement of the frames is not symmetrical regards the original frames from which they have been obtained, and therefore the content of the latter upon interpolation will in turn also not be symmetrical. In particular, if it is desired that the contribution of every original frame be inversely proportional to its distance from the new frame, it is necessary to carryout divisions by 3, that from the point of view of hardware implementation poses maggior problems regards the divisions by 2 and 4. The method according to the invention provides the introduction of a "temporal phase displacement" of the interpolated sequence respect to the original. It is to be noted that it is not intended to suggest that such phase displacement can, in itself, have an influence on the final result of interpolation: it is of interest at this moment only to consider the relative position of the interpolated frames in respect of the original frames from which they originate. In this light, it has been chosen to place an interpolated frame every three (frame z in figure 2) in a central position respect to a couple of original frames, while the frames of the type x and y are situated 3.3 ms. from an original frame.

Frames of the type z are then interpolated in the way described in the following, whereas the frames of the type x and y are obtained by replicating the "nearest" original frames. This approach allows for

- utilising all the original frames in the new sequence, thus conserving all the originally available information.
- interpolating only one in three frames of the output sequence, thus reducing by half the quantity of calculations necessary with respect to the method of figure 1.
- avoid divisions by 3, simplifying an eventual hardware implementation of the method.

On the other hand, this choice tends to slightly transform continuous movements into jerky movements, from the moment that the frames x and y will be used 3.3 seconds after (type x) or before (type y) the exact instant that they occupied in the original sequence. However the artefact thus introduced is hardly visible in the more critical areas of slow and uniform movement.

In figure 2, in which the numbers 100 and 101 have the same significance as in figure 1, the distribution of the frames after the "temporal phase displacement" is represented: the frames z are interpolated starting from two original frames.

## 1.2 Movement compensation

In the procedures of interpolation of multidimensional data the way in which the available information is distributed in the various dimensions takes or more importance. In the case of television images two spatial and one temporal dimensions are implicated. Upon the act of reconstructing an element of information (in the present case the grey level of a pixel) it is of interest to know the elements which are close to it, be it in the spatial or temporal sense.

We can therefore distinguish two types of information:

- *spatial information*: is carried by the pixels belonging to the same field of the pixel to interpolate, and arranged in positions being spatially close.
- *temporal information*: is given by pixels whose spatial coordinates are close to or the same as those of the pixel to interpolate, but are found in different frames.

If the case of de-interlacing is considered, both types of information are available and can be used. In particular the use of temporal information is preferred in the stationary areas, while the spatial information is more frequently used in the areas where movement is present and temporal information is less reliable.

In the case of increasing the scansion frequency, on the other hand, nothing is known regarding the instant of time in which the pixels to be interpolated are found; all the information available either belongs to the previous frame or that being successive, and it is however of the temporal type.

This lack becomes obvious in particular in the non-stationary areas; so as to be able to carry out an interpolation as true as possible, it is important to reach an acknowledgement of the existing type of movement that guides to a convenient use of the information available. The estimate and the movement compensation are typically the most complex parts of an interpolation method. The development of a form of estimation and compensation of the movement that guarantees satisfactory results while maintaining an

3

acceptable computational complexity has represented an important objective in the present invention.

### 1.2.1. Hypothesis on motion linearity

The approach taken is based on the assumption that any movement between the previous and the following frames takes place at a constant speed.

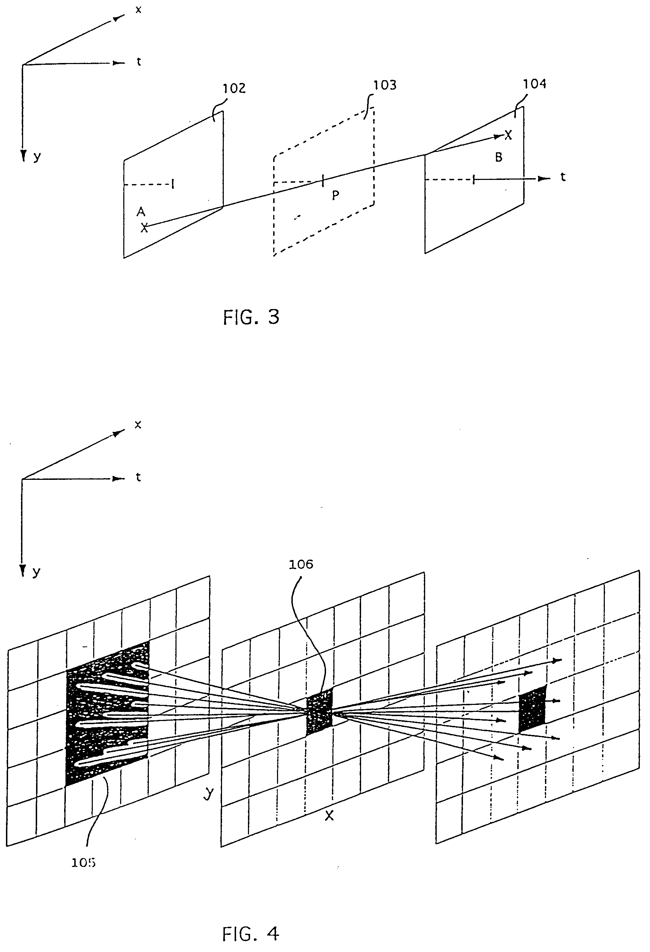

If an object (see fig. 3, in which reference number 102 indicates the previous frame, number 103 the interpolated frame and number 104 the successive frame) is found in the position A in the previous frame and in position B in the successive frame, it is possible to interpolate the pixel in position P carrying out a linear average along the direction A-B, i.e. supposing that:

$$P = 1/2 \ (A + B) \qquad (1)$$

The objectives of the movement estimation is that of finding the most appropriate direction for the carrying out of this average, i.e. calculating the movement vector whose components better approximate the horizontal and vertical movement between the previous frame and that being in succession of the object corresponding to pixel P. This estimate is carried out using a block matching method.

### 1.3 Movement trajectories

In calculating the value of every interpolated pixel, a certain number of trajectories are taken into consideration from among which one is chosen for the intended use. We shall call these tentative trajectories "rays". For example, in the case of figure 3 the movement trajectory that joins pixel A to pixel B corresponds to ray A-B. Along all of these rays a correlation index is evaluated, that will finally allow for choosing the most probable direction. As correlation index the "Block Matching Error" (BME) has been chosen, the explanation for such is contained in paragraph 1.3.1. The rays can be divided into two groups:
- *straight rays*
- *curved rays*

With the aim of simplifying the explanation of the method, a simplified version will first of all be analysed, that provides for the use of only straight rays. The extension of curved rays will on the other hand be provided in paragraph 2.1. So as to evaluate the movement vector relative to the pixel in position (x,y) in the frame tn (that will be identified with the notation (x,y,tn)), a band of straight rays passing the pixel (x,y,tn) shall be considered. Each of these rays intersects the previous and successive frame in pixels that are found respectively around the positions (x,y,tn) and (x,y,tn+1). In the effective implementation of the method the rays have been chosen in such a way so as that the pixels situated at the extremities of the rays make up a rectangular window, that shall be referred to as *support window* of the movement estimator (see fig. 4, in which number 105 indicates the support window and number 106 the position of the interpolated pixel).

The form and dimensions of the support window determine the amplitude of the movements that can be correctly estimated by the method. An improved performance corresponds to an increase of the dimensions of the support window, but with a greater computational complexity. It is also to be noted that the dimensions of the support window influence the choice of other parameters of the method, for instance the form and dimensions of pixel blocks used in the "block matching" procedure (paragraph 1.3.1.). This is explained in that the use of a larger support window (and therefore of a greater number of rays) brings about a greater risk of finding correlations along insignificant directions, such a risk has to be avoided by increasing the dimensions of the pixel blocks in the "block matching". Various forms have been experimented for the support window and a satisfying compromise between the quality of the results and complexity seems obtainable with a window 5x3. This choice gives preference to the horizontal movement, that is more common than vertical movement in natural sequences. Such choice means that movements being superior to 5 pixels per frame (3 vertical pixels) cannot be compensated by the method; however the loss of performance in this case is usually masked by the movement itself.

In the simplified version that is now being considered, a support window 5x3 requires the use of 15 rays. Each of these rays is associated to a movement vector. These vectors are defined by the movement relative to the two extremities of the rays on the previous and successive frames. With reference to fig. 3 as an example (x-i,y-j) are the coordinates of pixel A, (x,y) the coordinates of P, (x+i,y+j) those of B. The vector associated to the ray A-B is therefore (2i,2j). Positive components of the movement vectors refer to movement from left to right and downwards respectively. It is finally noted that the sole use of straight rays implicates movement vectors with equal components only.

### 1.3.1. Block matching

Once the rays to be examined have been selected, a correlation index for each of which is evaluated. This takes place by way of block matching, i.e. selecting a group of pixels around an extremity of the ray and comparing them with homologous pixels belonging to a similar group situated at the opposite extremity of the ray. A banal choice could for example consist in adopting as a correlation index the simple difference in absolute value of the two pixels located at the extremities of the ray in question (for instance |B-A| for the ray A-B of figure 3): such choice, used in previous versions of the method, has provided disappointing results, thus making obvious the need of more sophisticated solutions.

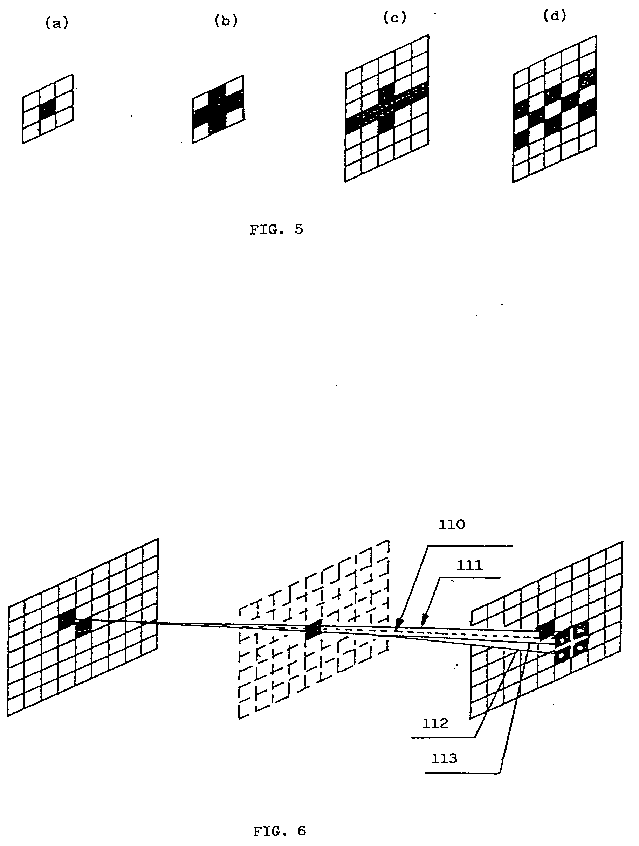

The use of different blocks being for the number and distribution of the pixels to which they belong has been experimented. Some of which are illustrated in figure 5, in which (a) represents the case of a single pixel, (b) the case of a 5 point cross, (c) the case of a 7 point cross and (d) the case of an 8 point quincunx. It has also been verified that, once the dimension of the block has been chosen (for instance 3X3 in fig. 5 (b) and 5X3 in fig. 5 (c) and (d), it is no longer necessary to consider all the pixels belonging to it, as it is sufficient to consider a sub-sampled block, reducing the computational charge without however reducing the results. In particular, a sub-sampled block of 8 pixels distributed "draughtboard style" on a rectangle 5x3 has given the best performances in association with a support window 5X3. Such block, utilised in the proposed method is illustrated in figure 5 (d).

The criterion for evaluating the correlation index is suitable for various choices, from among which the most commonly used are sum of absolute values of the differences in absolute values of the grey levels (Block Matching Error: BME), or the Mean Square Error (MSE). The first of which is much more preferred due to it's greater level of simplicity, and it has also been chosen in the present case.

In this simplified version of the method, the sum of the absolute values of the differences of grey levels calculated on the 8 pixels has been used as a correlation index without favouring any direction (movement vectors). Such correlation indexes are then compared with each other with the aim of identifying the movement vector to which the best correlation corresponds, i.e. the *minimum* BME.

### 1.3.2 Median filtering of the field of vectors

The procedure described above produces a field of movement vectors, whereby a vector corresponds to each of the pixels to interpolate. It is possible that errors in the movement evaluation can occur, especially in the area where fine detail is present. With the aims of increasing the coherence of the field of movement vectors and reducing the incidence of such errors, a filtering of the median type is applied to the field of vectors. A window 3x3 is used that is made to scroll from left to right and up to down on the vectorial field. In correspondence to each of the pixels to interpolate, the output vector from the medium vectorial filter is chosen in the following way.

As x1...x9 are the horizontal components of the 9 vectors included in the mask 3 x 3 of the filter, and y1...y9 are the vertical components and:

| (x1,y1) | (x2,y2) | (x3,y3) |
| (x4,y4) | (x5,y5) | (x6,y6) |
| (x7,y7) | (x8,y8) | (x9,y9) |

is the mask 3 x 3 of the vectorial median filter for components.
The following are therefore defined:

$$^{x}m \; = \; MED \; \{x1...x9\} \qquad (2)$$

$$^{y}m \; = \; MED \; \{y1...y9\} \qquad (3)$$

We will define as the vector, destined to replace the detected vector by means of "block matching", that of components ($^{x}m$,$^{y}m$).

It is to be noted that output vectors are not re-used as input for successive steps (i.e. for the filtering of the movement vector relative to the adjacent pixel): the filtering is therefore *not recurrent*. Movement vectors of the field filtered in this way are finally utilised in the linear interpolation procedure, as explained in the paragraph 1.2.1.

## 1.4 Performances of the basic method

As already specified in paragraph 1.3, the basic version of the method which up to now has been taken into consideration is able to detect, with the sole use of straight rays, only consistent movement including an even number of pixels, thus constituting an unacceptable limitation for our aims. For example, if the support window is 5 wide pixels and 3 high, only movements of 0, +2, +4 in horizontal and 0, +2 in vertical can be detected. These shall be called *even movements*. To also be able to work with odd movements of pixels it is necessary to also take into consideration curved rays, besides those being straight.

Unfortunately, an increase in the number of rays utilised corresponds to an increment of the computational complexity, and thus making necessary the search for some form of simplification, as proposed in the paragraph 2.2.

## 2 The complete method

We shall now abandon the simplifications introduced in the previous paragraph and examine in detail the complete version of the proposed method.

## 2.1 Curved rays

Supposing we wish to interpolate the pixel in position (x,y,tn) and consider an object that moves three pixels to the right, for example deplacing itself from position (x-1, y,tn-1) to the position (x+1, y,tn+1). It can be verified with simple considerations that a straight ray does not exists that can detect this displacement, neither in the centred band in (x,y,tn), nor in that centred in (x+1, y,tn). Being as the detection of the correct movement is not possible, the selection of the most correlated direction will be strongly dependent on the noise, and this is destined to bring about errors in the interpolation. The same problem occurs for every movement that implicates an odd number of pixels per frame, horizontally and/or vertically.

So as to complete the analysis of the trajectories that can interest the pixel (x,y,tn) it is necessary to take into consideration 4 rays for every pixel belonging to the support window (see fig. 6):

1. a straight ray (110);

2. a ray obtained from the previous by deplacing the extremity located in the successive frame one pixel to the left (*ray curved to the left*: 111)

3 a ray obtained from the straight ray by deplacing the extremity in the successive frame downwards a pixel (*downwardly curved ray*: 112).

4. a ray obtained from the straight ray by deplacing the extremity located in the successive frame by a pixel to the left and one downwards (*ray curved to the left position and downwards*: 113).

In this way, any movement consisting in an entire number of pixels and falling within the limitations established by the sizes of the support window (paragraph 1.2) may be detected.

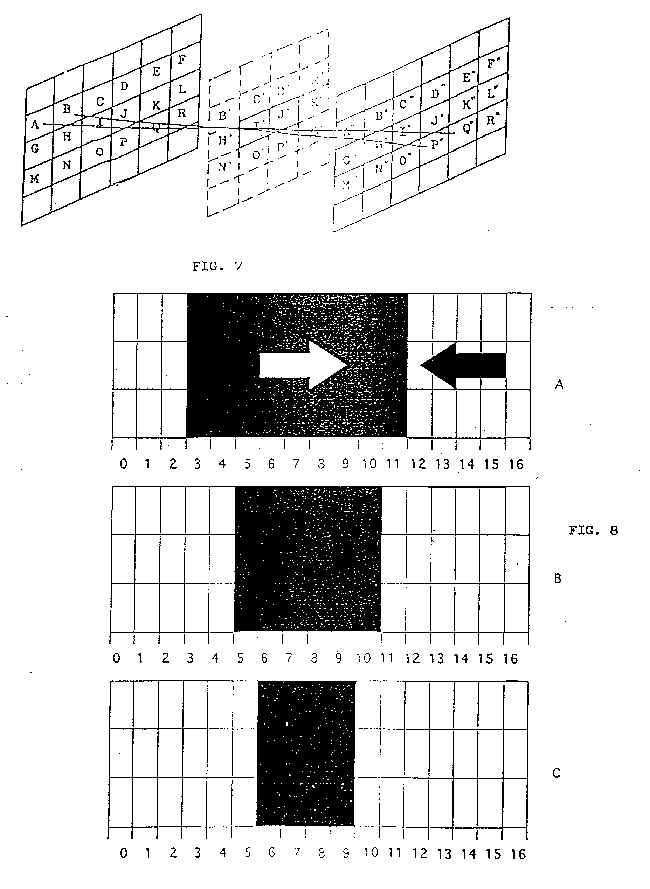

When the interpolation has to be carried out along an identified direction by a vector with at least one odd component, the interpolation procedure changes slightly from that selected for equal movements (Eq. 1). With regards to Figure 7, B - I' - Q'' (version curved to the right of the straight ray B- I' - P''') is the ray corresponding to the identified movement vector. The more immediate solution would consist in mediating between the two pixels located at the extremity of the ray itself, i.e.:

$$I' = 1/2 (B + Q'')$$

This approach involves however splitting the odd movement in two complete movements, in particular attributing a displacement of a pixel at the pause between the previous frame and the current one, and a displacement of 2 pixels between the present frame and that successive, which implicates a temporal phase displacement of half a pixel, causing the origins of an error.

Another possibility consists in mediating between 4 pixels, or in putting:

$$I' = 1/4 (A + B + P'' + Q'')$$

The odd movement is in this way separated in two not complete equal movements. With this approach one could object that it causes the introduction of a certain level of defocusing, but in reality this may be observed only in artificial sequences. In the case of real sequences the method treats movements in a way being similar to the action of a telecamera in phase of filming, thus becoming more similar to the effect of which the human eye is accustomed and therefore giving origin to a better overall result.

It is also to be noted that it is not necessary to also curve rays to the right or upwards.

As previously explained (paragraph 1.2.1), it is of interest to consider a certain number of attempt movement vectors for each pixel to interpolate, and to find from among these which direction is the most adapt to the interpolation. With regards to Figure 7, in which it is seen that the rays A - I' - P'' and B - I' - Q'' identify the same movement vector relative to the pixel I', considering the interpolation of the pixel I', and in particular, the "block matching" relative to the vector (3.2). A ray corresponding to this vector is B - Q'' (version curved to the left of the straight ray B - I' - P''). It can however be observed that also ray A - P'' (version curved to the right of the straight ray A - I' - Q') would correspond to the same movement vector (3,2). Therefore it is possible to save a significant quantity of calculations avoiding the double control that would be carried out by operating the "block matching" along both rays.

### 2.2 Restricted search of movement vectors

As already affirmed, maintaining the computational complexity as low as possible represents a primary objective in the development of this method. Unfortunately, it has been verified that the complete method herein before described does not satisfy this requirement. Supposing a support window 5 pixels wide and 3 high and curved rays are used, for every pixel to interpolate correlation measurements 60 rays long are carried out. Utilising the "block matching" method described in paragraph 1.3.1. every test requires 8 differences in absolute value (for the pixels distributed in a draughtboard style sampled by the block 5 x 3), thus amounting the number of operations in absolute value to be carried out to about 500. To these the 60 comparisons are to be added for evaluating the ray that has the maximum correlation and other operations, that however represent a minor load.

If one accepts the hypothesis that the field of vectors does not have frequent discontinuities, but is varying in a generally gradual manner, it is possible to avoid calculations relative to a greater part of rays without causing a significant loss in accuracy in the estimation of movement.

Let us consider for example a pixel for which a movement components vector (4,2) has been estimated. It is somewhat improbable that the adjacent pixel has a movement vector being very different, for example (-3.1). In the same way in which, fixing the sizes of the support window, a limit to the maximum speed detectable by the method has been established, a similar limit to the difference in speed between adjacent pixels is herein set. A simple way to put this aim into practice consists in restricting the search of the movement vector to a limited number of directions that, according to a certain criterion, are not very different from those attributed to surrounding pixels.

This can also be seen as a preliminary consistency test on the field of movement vectors. The constant search for computational simplicity been the cause of implementing this modification in a somewhat "drastic" manner. At the moment of interpolating the pixel in position (x,y) the vector found for the previous pixel (x - 1,y) is used as a reference and only the 9 vectors adjacent to it are investigated.

The vector relative to the pixel (x - 1,y) is herein denoted with **V** and its components with Vx and Vy.

The operations of "block matching" are only carried out on the 9 vectors here under shown:

| (Vx - 1, Vy - 1) | (Vx,Vy - 1) | (Vx + 1, Vy - 1) |
| (Vx - 1, Vy) | (Vx,Vy) | (Vx + 1, Vy) |
| (Vx - 1, Vy + 1) | (Vx,Vy + 1) | (Vx + 1, Vy + 1) |

In this way, the correlation calculations involve only 9 rays rather than 60.

### 2.3 Weighting of the correlation indexes

It is clear that the reduction of the number of rays to be verified as proposed above slows the reaction of the method in the presence of variations in the field of the movement vectors.

Where a step appears in the vectors field (for example in connection with two objects with different trajectories that are superimposed), the restricted search tends to produce a "trailing" effect, and due to this a certain number of pixels to the right of the step may be attributed wrong speeds, before returning to a correct estimation.

Another problem, similar to this, is witnessed in the presence of a somewhat common movement configuration: a thin vertical bar that moves horizontally along (or together with) a uniform background. In the uniform area, movement vectors tend to assume a casual distribution. During scan, the method reaches the vertical bar, the movement vector **V** (see, paragraph 2.2) may have any orientation, and in particular being very different from that corresponding to the movement of the bar. The restriction of the search can therefore cause the failure in identifying the moving detail, thus providing the possibilities of errors. In order to reduce this problem, the correlation indexes are weighted so that the rays nearest to the direction (0,0) are favoured. The aim is that to allow the vector **V** to deplace itself in extreme positions only when this is effectively necessary, otherwise trying to return to more central configurations. Having the tendency to find itself in more baricentric positions, the vector **V** has better possibilities of hooking on to the correct movement position, and the method thus reacts more readily to the field variations.

If we call BME (Block Matching Error) the sum of the differences in absolute value of the 8 pixels of the blocks located at the extremity of the ray corresponding to the vector under test U, the weighted correlation index (Weighted Correlation Index) is defined as:

$$WCI = BME \times (1 + K \times (Ux.Ux + Uy.Uy))$$

where K is a parameter. The results of the simulations suggest for K the selection of values comprised within 0.05 and 2.

### 3. An example

In order to clarify the functioning of the method, an example is herein proposed being relative to a somewhat simple situation, that does however allow for observing how the method tackles particular situations, as for example moving edges, uniform areas, superimposed objects.

Consider a black object that moves 3 pixels to the right between the previous and successive frame with a "trail" being one pixel wide, for adding realism to the situation. Another white object is also present, which on the contrary moves two pixels to the left, superimposing the black object (note fig. 8, in which in part A the previous frame is illustrated, in part B the interpolated frame and in part C the successive frame). In order to simplify the explanation, the support window is a 5x1. In practice the study is carried out only "horizontally", and the restricted search only implicates 3 rays, rather than 9: the extension of the window 5x3 is banal. The blocks for the "block matching" are of the structure described in figure 5.

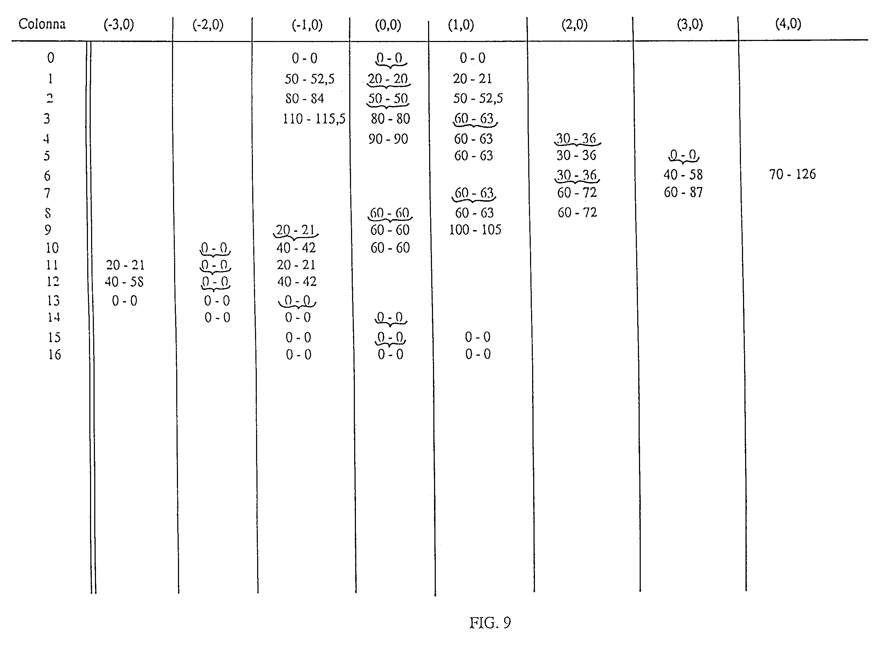

The results of the "block matching" are gathered in figure 9.

The median filtering on the field of vectors has been omitted.

For each of columns (numbered from 0 to 16), the Block Matching Error along the three rays of the restricted search have been calculated and weighted, obtaining in this way the correlation index WCI (in bold print). A grey level of 20 has been attributed to the black object; the trail has a value of 10, the white object and the background have values of 0. The value of the constant K (equation 6) has been fixed at 0.05. It can be observed from the table that the three rays along which the "block matching" is carried out are "centred" around the most correlated direction found for the previous pixel (distinguished by the parenthesis of figure 9), as explained in paragraph 2.2. Starting from column 3, the method begins to react in the presence of the moving edge: the movement vector (1.0) is selected and the vector **V** begins to move towards a correct position. This process continuous in columns 4 and 5, and the interpolation along the selected directions has given the following results: for column 3 the grey level is 2.5, for column 4 it is 5 for the column 5 it is 15, and finally for column 6 it is 20. At column 6, the method begins to detect the presence of the white object, and begins a transition phase: in columns 7 and 8 the method does not identify a direction that shows a correlation being clearly better, and therefore the weighting of the indexes tends to deplace the search to more central positions. For example in columns 7 and 8 all the vectors investigated give a Block Matching Error value of 60.

The weighting then favours the rays being nearest to the direction (0,0), or (1.0) and (0.0) respectively. Having deplaced the vector **V** in a baricentric position allows the method to detect the movement of the white object starting from column 9 and to hook itself correctly to column 10, where the vector selected is in fact (-2,0). In the successive columns, from the moment that the white object has a uniform colour, the weighting procedure brings the search around central positions.

If on the other hand the object had detail, the method would remain hooked to the direction (-2.0).

### 4. Hardware Considerations

For an approach towards the hardware implementations of the method described in the previous section, the requirements in terms of computational complexity, speed and memory dimensions have to be considered.

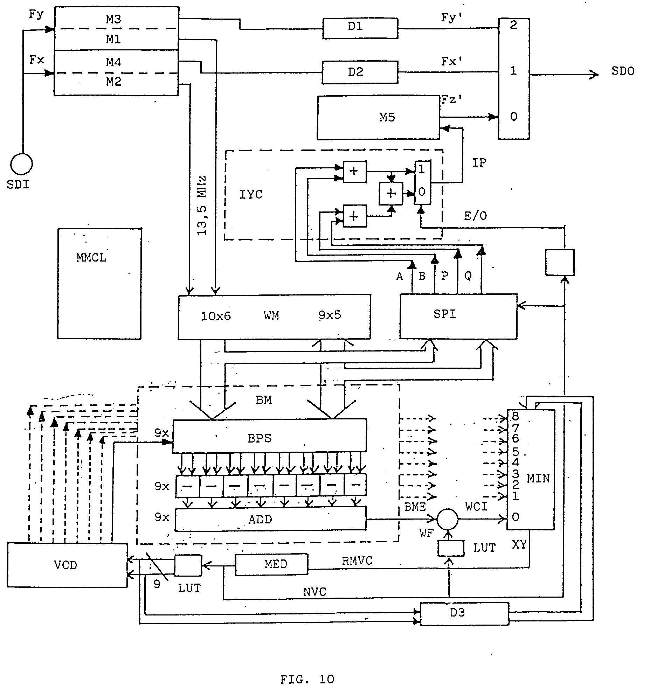

Figure 10 illustrates a block diagram of a possible implementation; in the figure the symbols M1,M2,M3,M4,M5 indicate 5 fast memories of two serial ports (SAM); with SDI a serial data input of 27 MHz is indicated; with SDO the serial data output of 40,5 MHz is indicated; with MMCL a memory and multiplexer control logic; with D1,D2 and D3 three delay lines; with IYC a luminance and crominance interpoler of 13,5 MHz; with WN a memory for creating the windows; with SPI a selection pixel interpoler block; with IP the interpolated pixels; with E/O the even/odd movement; with BM the "block matching"; with BPS the pixel selection block BME; with ADD the seven adders; with VCD decoder control vectors, with RMVC the components of the movement vectors.

Making reference to the block diagram represented in figure 10, the greater charge is provided by the movement estimator. Given as rather precise movement vectors are foreseen, the overall complexity of the interpolator is low.

### 4.1 Computerisational complexity

### 4.1.1 The estimator of the movement vector

9 "candidate vectors" are managed, each requiring 8 absolute differences and 7 sums. With the aim of calculating the 9 candidates WCI, 9 multiplications are necessary. The weighting factors are function of the vectorial components; they are given by

$$WF = (1 + EL(Vx^*Vx + vy^*Vy)) \qquad (1)$$

The sum in (1) can be calculated once for all the possible 80 vectors. The set of possible weighting factors can be limited to 16 different values only. AS an alternative to 9 pure adders, each adder can be implemented as a table memorised in a ROM, containing BME x WF values approximated by means of powers of 2, where the weighting factor WF is in turn a function of the vectorial components. This means that for every WCI value, the multiplication is reduced to a pure access LUT (Look Up Table). The choice of the best vector requires a minimum search, that is equivalent to 8 comparisons. The median filtering of the vector field can be carried out on-line; this requires another 8 comparisons for every vectorial component. Eventually a decoding logic is necessary for generating the controls for selecting the pixels window.

A sensational improvement in efficiency is given by a coded management of the vectors, so as that every vector can be represented by a single word of 6 bit and the median filter of the vectorial components is reduced to one sheer scalar median filter rather than two.

### 4.1.2 The interpolator

The interpolator in itself requires 3 adders and a multiplexer.

It is supplied by a controlled pixel selection block, in turn, by the estimated movement vector.

The total count in terms of number of operations for an output point is the following:

72 absolute differences
63 unsigned additions
24 comparisons
9 multiplications (optional)

Input and output data (pixels) are both of 8 bits for the luminance and crominance components, while the two components of the movement vector can be represented by one 8 bits wide word.

The movement vectors are calculated once both for the luminance and for the crominance.

### 4.2 Speed

The serial data input stream requires a rate of 27 MHz, while the output data flow (75 progressive television frames) has a rate of 40.5 MHz.

However, given that an interpolated frame is generated every three output frames, the resulting repetition period of an interpolated frame Fz is only of 25 Hz. This may be utilised for reducing the frequency of clock of the 13,5 MHz logic.

Only the double port RAM, the relative control logic and the output multiplexer must work at the considerable high speed of 40,5 MHz, while the calculation block has more tranquil needs.

The accesses to the two port RAM are serial, so that the control logic results in being sufficiently simple

Supposing we elaborate the 9 candidate vectors in parallel, the slower 13,5 MHz clock allows time slots that are long enough for arranging in a queue like manner the operations to be carried out in the process of "block matching" and in the determination process of the movement vector. The calculation of a vector WCI requires an organisation in 5 stages of arithmetical binary operations (adders and subtracters), while the estimated filtered vector in a median filter requires an organisation in 8 stages (4 + 4) of binary comparators. A clock period of 74 nanoseconds (13,5 MHz) does not require conditions which are particularly severe for organising a good "pipelining" (queue arranging) of these 13 stages with the existing silicon technologies of 1 micro or less. The cost of such an architecture is due to the fact that the calculation hardware has to be repeated as many times as the number of candidate vectors. Therefore the complexity of the hardware is a linear function of the complexity of the method in terms of the number of candidate vectors that are intended to be considered.

## 4.3 Memory size

The third key element to be considered is the size of the memory. Three kinds of memories are necessary:
- dual port serial access memories for resizing the timing requirements of the video frames;
- line memories (LM) for generating the pixel diagram for the "block matching" and for the median filtering of the vectors;
- ROM memory blocks for the tables.

### 4.3.1 Timing memories

There are 4 double port SAM (Serial Access Memory) at the input (M1, M2, M3, M4) for managing the Fx and Fy input frames. They are in fact field memories. Two of them are written at 27 MHz and read at 13,5 MHz for supplying the estimator of the movement vector, the other two are written at 27 MHz and read at 40,5 MHz for generating the two frames Fx and Fy at 75 Hz.

There in a two port SAM (frame memory, M5) at the output of the interpolator for converting the frame Fz generated at 25 Hz in an output frame of 75 Hz.

The key parameter for evaluating these blocks is their serial access time.

All these memories work at 13,5 MHz and are commonly available on the market.

### 4.3.2 Window memory

For generating pixel diagrams corresponding to extended support windows in the frames Fx and Fy for the "block matching" in the movement estimator 5 + 4 line memories (LM) are necessary for the luminance components; for the crominance components only 3 + 2 LM are necessary, since the crominance interpolation the luminance vectors are utilised.

A total of 14 LM are necessary.

Furthermore 8 bit registers are necessary for making available the single pixels of a line, for a total of 94 registers, and for the median filter, that requires 8 registers. Such a relevant number of registers may be more conveniently realised using a RAM memory of 128 words of 8 bit.

### 4.3.3 Memory for the median filter

The median filter for the vectorial components has a support of 3x3 points, interesting 3 lines; therefore another two LM are necessary for memorising filtered vectors; additional registers are then necessary to access the single vectors of a line, for a total of 6 registers of 8 bit.

### 4.3.4 ROM Memory

ROM are necessary to implement some tables (LUT): one is required for determining "adjacent" vectors of a new "attempt"; its size is negligible.

Other ROM blocks are required for implementing the tables of multipliers; the memory requested depends on the arithmetical precision (length of numbers) of the values BME and WCI. A high precision requires words of 11 bit for the values BME and therefore a total of 9 blocks of 64 kilowords of 12 bit; a minor precision requires minor dimensions .

## 4.4 Timing architecture

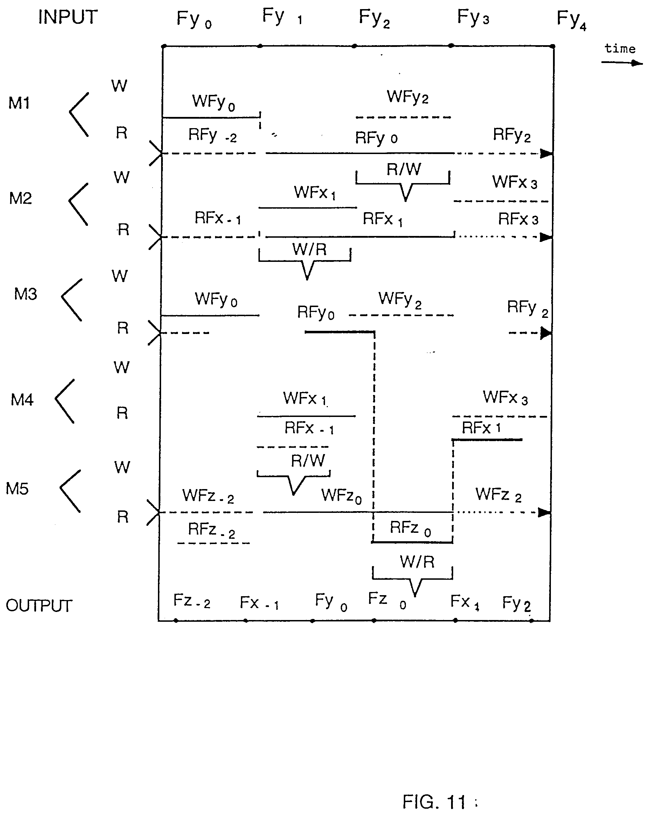

In Figure 11 a draft of the timing diagram is illustrated (in figure 11 the letter **W** stands for "write" and the letter **R** stands for "read", as is usual).

Two fundamental concepts are the basis of the timing diagram:

A) serial supply of the movement vector estimator with pixels belonging to the frames Fx and Fy at a rate of 13,5 MHz;

B) pipelining the estimating operations of the vector and timing resizing operations.

At the input of the motion estimator there are two frame memories and another two for the timing resizing of the frames Fx and Fy. Furthermore an output memory serves in managing the timing resizing of the frame Fz. All the read and write operations are put in the queue (pipelining).

The memories of the motion estimator is considered.

A complete frame Fx at 50 Hz is written at 27 MHz in the memory M1, and then read at 13,5 MHz for supplying the movement estimator. This requires two frame periods (40 milliseconds), so that in the second frame period, while the read operation is finished, a new frame Fy is written. So as to not superimpose the last pixels of the old and new frame, a read-before-writing operation is carried out. A similar procedure is carried out with the memory M2, for the Fx type frames, but a write-before reading operation is carried out.

Two successive frames Fx and Fy are simultaneously preselected at the input of the movement estimator.

The timing resizing memories may now be considered. a partially superimposed operation of write and read is necessary, the reading is carried out at 40,5 MHz and the writing at 27 Mhz, both for M3 and for M4. A read-before-writing operation is necessary for M4. (frame Fx).

Finally, the frame memory M5 for the timing resizing of output Fz is continually written at 13,5 MHz and read at 40,5 MHz, with a superimposed write-before-reading operation in the last third of a period of two frames at 50Hz (40 milliseconds).

## 4.5 Considerations on the method

The hardware complexity of a such an architecture is not to be underestimated. Thus a robust approach to the hardware realisation is necessary.

The conversion process, from a pure static description of the method (a software program), to a hardware structure specified at a logic port level, consists in the following steps.

A serial description at a pixel level (SPLD) of the method takes account of the performance requirements mentioned above. Such a description in also useful for solving synchronisation problems between the movement estimator and the frame frequency converter. Its correctness may be easily verified by means of direct confrontation with results of the "golden" reference methodology. Furthermore the SPLD operates as a generator of output reference diagram for a successive use of hardware simulators. The SPLD is still a behavioural description of the architecture hardware chosen for implementing the method corresponding to a description at a register transfer level (RTL).

A structural description VHLD of the data flow architecture is easily obtainable from a description SPLD, by means of very simple transformation techniques, whereas finished state control logic and memory blocks are functionally described.

Automatic VHLD compilers are able to realise a certain degree of logic optimisation, such as redundant logic removal, and to supply a code that may either be simulated by delay units, or may be synthesised.

The synthesis process is applied to the control blocks and data flow that are susceptible to be synthesised by functional silicon blocks and/or by logic links. The mapping of different technologies provides a series of alternatives to be evaluated for improving the calculation efficiency from a hardware point of view (speed, area, power dissipation).

The VHLD blocks described functionally and those synthesised can be simulated together with the test patterns generated by the SPLD for an exhaustive simulation of the system.

At end the mains list synthesised by the VHLD, technologically oriented, to port level, may be elaborated so as to be realised with FPGA and ASIC components.

## 5 Results

The proposed method has been experimented both with real sequences and with test sequences, carrying out both the single interpolated frame analysis, and of entire sequences with the use of a sequencer VTE that allows for the display in real time of sequences at 75 Hz. The classification and the comparison of performances of the different versions of the method are questions of a difficult approach, and the structure of the problem itself has suggested resorting to subjective judgement as a main analysis instrument.

The results of the simulations carried out result in being satisfactory from the point of view of both the quality of obtained sequences, and of the computational complexity, which has been maintained within acceptable limits in view of the hardware implementation.

From the given description the characteristics of the conversion method subject of the present invention result in being clear, as do its advantages.

In particular the conversion method according to invention allows for converting the frame frequency of a video signal of progressive scansion from 50 Hz to 75 Hz in an efficient manner, so as to obtain a satisfactory image quality also maintaining however the calculation complexity within acceptable limits.

It is clear that numerous variations can be introduced to the conversion method subject of the present invention , without for this departing from the novelty principles inherent in the innovative idea, as it is clear that in the practical realisation of the invention the materials and the forms of the illustrated details can be different, and the same can be replaced with technically equivalent elements.

**Claims**

1. Method for the conversion of the frame frequency of a video signal of progressive scansion from 50 Hz to 75 Hz, characterised in that a temporal redistribution of the original frames is provided and an interpolation of an additional frame every two originals.

2. Method for the conversion of the frame frequency of a video signal of progressive scansion from 50 Hz to 75 Hz, according to claim 1, characterised in that said temporal redistribution requires that one of the original frames (Fx) is shown 3,3 milliseconds before the instant occupied in the original sequence, that the other original frame (Fy) is shown 3,3 milliseconds after of the instant that it occupied in the original sequence, and that the additional frame (Fz) is interpolated in a central position between said two original frames displaced in a temporal manner.

3. Method for the conversion of the frame frequency of a video signal of progressive scansion from 50 Hz to 75 Hz, according to claim 1 or 2, characterised in that the interpolation provides a movement compensation, that a movement vector (V) is associated to each pixel of the frame to be interpolated and that the values of the interpolated pixel are produced with an operation of average along the estimated path of movement.

4. Method for the conversion of the frame frequency of a video signal of progressive scansion from 50 Hz to 75 Hz, according to claim 3, characterised in that for the interpolation the most probable local subgroup of the possible vectors is considered.

5. Method for the conversion of the frame frequency of a video signal of progressive scansion from 50 Hz to 75 Hz, according to claim 3, characterised in that a vectors field is generated for the interpolation that is made uniform by means of a median filtering of the vectorial components.

6. Method for the conversion of the frame frequency of a video signal of progressive scansion from 50 Hz to 75 Hz, according to one or more of the previous claims from 3 to 5, characterised in that when interpolating the pixel in position (x,y) the vector found for the previous pixel (x - 1,y) is utilised as reference and only the 9 vectors adjacent to it are examined.

7. Method for the conversion of the frame frequency of a video signal of progressive scansion from 50 Hz to 75 Hz, according to one or more of the previous claims from 3 to 5, characterised in that for the interpolation weighted correlation indexes (WCI) are utilized the parameter K of which is given a value between 0,05 and 2.

8. Method for the conversion of the frame frequency of a video signal of progressive scansion from 50 Hz to 75 Hz, according to one or more of the previous claims from 3 to 5, characterised in that as support window for the interpolation a quincunx of 8 pixel is considered.

9. Method for the conversion of the frame frequency of a video signal of progressive scansion from 50 Hz to 75 Hz, according to one or more of the previous claims from 3 to 5, characterised in that the management of the memories (M1, M2, M3, M4, M5) necessary for the two frames (Fx, Fy) to be recopied and for the frame (Fz) to be interpolated is carried out based on operations of the read-before-write type or of the write-before-read type in order to optimise the timing of the operations that take place in partial superimposition.

10. Apparatus for the implementation of the method for the conversion of the frame frequency of a video signal of progressive scansion from 50 Hz to 75 Hz according to one or more of the previous claims.

FIG. 1

14

50 Hz

75 Hz

1/2   1/2          1/2   1/2

x    y    z    x    y    z    x

3,3ms
13,3ms
10ms
20ms
10ms

t

100  ——————►

101  - - - - - - ►

FIG. 2

FIG. 3

FIG. 4

(a)　　　　　(b)　　　　　(c)　　　　　(d)

FIG. 5

FIG. 6

FIG. 7

FIG. 8

A

B

C

| Colonna | (-3,0) | (-2,0) | (-1,0) | (0,0) | (1,0) | (2,0) | (3,0) | (4,0) |
|---|---|---|---|---|---|---|---|---|
| 0 | | | 0 - 0 | 0 - 0 | 0 - 0 | | | |
| 1 | | | 50 - 52,5 | 20 - 20 | 20 - 21 | | | |
| 2 | | | 80 - 84 | 50 - 50 | 50 - 52,5 | | | |
| 3 | | | 110 - 115,5 | 80 - 80 | 60 - 63 | | | |
| 4 | | | | 90 - 90 | 60 - 63 | 30 - 36 | | |
| 5 | | | | | 60 - 63 | 30 - 36 | 0 - 0 | |
| 6 | | | | | | 30 - 36 | 40 - 58 | 70 - 126 |
| 7 | | | | | 60 - 63 | 60 - 72 | 60 - 87 | |
| 8 | | | | 60 - 60 | 60 - 63 | 60 - 72 | | |
| 9 | | | 20 - 21 | 60 - 60 | 100 - 105 | | | |
| 10 | | 0 - 0 | 40 - 42 | 60 - 60 | | | | |
| 11 | 20 - 21 | 0 - 0 | 20 - 21 | | | | | |
| 12 | 40 - 58 | 0 - 0 | 40 - 42 | | | | | |
| 13 | 0 - 0 | 0 - 0 | 0 - 0 | | | | | |
| 14 | | 0 - 0 | 0 - 0 | 0 - 0 | | | | |
| 15 | | | 0 - 0 | 0 - 0 | 0 - 0 | | | |
| 16 | | | 0 - 0 | 0 - 0 | 0 - 0 | | | |

FIG. 9

EP 0 650 293 A2

FIG. 10

FIG. 11 :